(19) Europäisches Patentamt
European Patent Office
Office européen des brevets

(11) **EP 3 153 376 B1**

(12) **EUROPÄISCHE PATENTSCHRIFT**

(45) Veröffentlichungstag und Bekanntmachung des Hinweises auf die Patenterteilung:
**27.06.2018   Patentblatt 2018/26**

(51) Int Cl.:
***B60W 50/14*** *(2012.01)*    ***B60W 30/08*** *(2012.01)*
***B60K 28/06*** *(2006.01)*    ***G08G 1/16*** *(2006.01)*

(21) Anmeldenummer: **16191397.5**

(22) Anmeldetag: **29.09.2016**

(54) **VERFAHREN UND VORRICHTUNG ZUR ERMITTLUNG DER ADAPTIVEN REAKTIONSZEIT DES FAHRERS EINES KRAFTFAHRZEUGS**

METHOD AND DEVICE FOR DETERMINING THE ADAPTIVE REACTION TIME OF A DRIVER OF A MOTOR VEHICLE

PROCÉDÉ ET DISPOSITIF POUR DÉTERMINER LE TEMPS DE RÉACTION ADAPTATIF DU CONDUCTEUR D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.10.2015   DE 102015219465**

(43) Veröffentlichungstag der Anmeldung:
**12.04.2017   Patentblatt 2017/15**

(73) Patentinhaber: **VOLKSWAGEN AKTIENGESELLSCHAFT 38440 Wolfsburg (DE)**

(72) Erfinder:
• **Milch, Stefan 38162 Hemkenrode (DE)**
• **Maus, Benjamin 40215 Düsseldorf (DE)**
• **Schroven, Frank 38302 Wolfenbüttel (DE)**

(56) Entgegenhaltungen:
DE-A1-102008 019 519    DE-A1-102011 115 878
DE-A1-102013 218 280    JP-A- 2009 093 561

**Beschreibung**

Die Erfindung betrifft ein Verfahren zur Ermittlung der adaptiven Reaktionszeit des Fahrers eines Kraftfahrzeugs gemäß dem Oberbegriff des Anspruchs 1 sowie ein entsprechendes Assistenzsystem gemäß dem Oberbegriff des Anspruchs 9.

Das Umfeldbeobachtungssystem "Front Assist" erkennt mittels einer geeigneten Sensorik, wie beispielsweise Radar oder Laser, kritische Abstandssituationen und hilft den Anhalteweg zu verkürzen. In Gefahrensituationen warnt das System den Fahrer optisch und akustisch sowie mit einem Bremsruck, wobei das System "Front Assist" unabhängig von der automatischen Distanzregelung ACC arbeitet.

Dabei reagiert das System "Front Assist" in zwei Stufen auf kritische Annäherungssituationen. In der ersten Stufe warnt das Assistenzsystem den Fahrer mit akustischen und optischen Signalen vor plötzlich stark verzögernden oder langsam vorausfahrenden Fahrzeugen und der damit verbundenen Kollisionsgefahr. Parallel dazu wird das Fahrzeug auf eine Notbremsung "vorbereitet". Die Bremsbeläge werden an die Bremsscheiben angelegt, ohne dass es zu einer Fahrzeugverzögerung kommt. Das Ansprechverhalten des hydraulischen Bremsassistenten wird sensibler geschaltet.

Sollte der Fahrer nicht auf die Warnung reagieren, so wird er in der zweiten Stufe durch einen einmaligen kurzen Bremsruck auf einen drohenden Auffahrunfall hingewiesen und das Ansprechverhalten des Bremsassistenten weiter erhöht. Tritt der Fahrer dann auf die Bremse steht sofort die volle Bremsleistung zur Verfügung. Ist die Bremsung nicht stark genug, erhöht "Front Assist" den Bremsdruck auf das erforderliche Maß, damit das Fahrzeug vor dem Hindernis zum Stehen kommen kann.

Fahrzeugabhängig kann das System "Front Assist" zwei weitere Funktionen anbieten. Zum Einen kann "Front Assist" nach der Kollisionswarnung selbstständig eine automatische Teilbremsung einleiten, die ausreicht, um das Fahrzeug abzubremsen und die Aufmerksamkeit des Fahrers wieder herzustellen. Zum Anderen wird in Situationen, in denen eine Kollision unvermeidbar ist, der Fahrer zusätzlich mit einer automatischen Vollbremsung unterstützt. Dabei bremst "Front Assist" das Fahrzeug maximal ab, um die Aufprallgeschwindigkeit zu verringern und die Folgen der Kollision so gering wie möglich zu halten.

Fahrzeugabhängig kann "Front Assist" auch bei niedrigen Geschwindigkeiten unterstützen. Übersieht der Fahrer ein Hindernis, bremst "Front Assist" mit City-Notbremsfunktion das Fahrzeug automatisch ab und sorgt für eine Verringerung der Aufprallgeschwindigkeit. Im Idealfall werden Auffahrunfalle so gänzlich vermieden.

Die Druckschrift DE 10 2011 115 878 A1 zeigt ein Verfahren und eine Vorrichtung zur Warnung des Fahrers eines Kraftfahrzeuges vor einer drohenden Kollision, wobei eine Warnung an den Fahrer unter Berücksichtigung einer Fahrerreaktionszeit abgegeben wird. Dabei sind eine minimale und eine maximale Fahrerreaktionszeit vorgegeben, es erfolgt eine Bestimmung der Fahreraktivität, es wird eine aktuelle Fahrerreaktionszeit als Funktion der Fahreraktivität bestimmt, und es wird zum Zeitpunkt einer erkannten Fahreraktivität die zur Warnung verwendete Fahrerreaktionszeit auf die aktuelle Fahrerreaktionszeit umgeschaltet, wenn die aktuelle Fahrerreaktionszeit kleiner als die maximale Fahrerreaktionszeit ist, wobei die aktuelle Fahrerreaktionszeit nach unten durch die minimale Fahrerreaktionszeit begrenzt ist.

Aus der Druckschrift DE 102 58 617 B4 ist ein Verfahren zur Auslösung eines selbstständigen Bremsvorgangs zur Vermeidung eines Auffahrens eines Fahrzeugs auf ein vorausfahrendes Fahrzeug bekannt, wobei eine Fahrerwarnung ausgelöst wird, wenn eine vorgegebene Warnbedingung erfüllt ist. Dabei gibt die Erfüllung der Warnbedingung an, dass aufgrund der die momentane Fahrsituation bildende Relativbeschleunigung des Fahrzeugs und einer vorgegebenen Notbremsverzögerung bei Ablauf einer vorgegebenen Warnzeitdauer der selbstständige Bremsvorgang auszulösen ist, um eine vorgegebene Zielrelativgeschwindigkeit oder einen vorgegebenen Zielsicherheitsabstand zwischen dem Fahrzeug und dem vorausfahrenden Fahrzeug zu erreichen. Wird eine Fahreraktivität oder eine Verringerung der Auffahrgefahr erkannt, so kann die bereits ausgelöste Warnung beendet werden.

Die Druckschrift DE 10 2007 060 862 A1 offenbart ein Notbremssystem für ein Fahrzeug mit einer Steuereinheit zur Steuerung des Bremssystems des Fahrzeugs und einer Umfeldsensorik zur Bereitstellung von Abstandsinformationen zu einem vorausfahrenden Fahrzeug, wobei die Steuereinheit als Funktion der Abstandsinformation eine mindestens zweistufige Fahrerwarnung vor einer drohenden Kollision erzeugt. Die Steuereinheit bestimmt näherungsweise die Zeitdauer bis zum Eintritt einer Kollision mit dem vorausfahrenden Fahrzeug und vergleicht die bestimmte Kollisionszeitdauer mit einer Spurwechselzeitdauer, einer Kreisbahnausweichzeitdauer und einer Notbremsdauer. Bei einem Unterschreiten der Spurwechselzeitdauer wird eine erste Warnung, beim Unterschreiten der Kreisbahnzeitdauer eine zweite Warnung und beim Unterschreiten der Notbremszeitdauer eine dritte Fahrerwarnung ausgegeben, so dass der Fahrer aktiv in das aktuelle Bremsgeschehen eingreifen kann.

Aktuell wird im derzeitigen "Front Assist" System aus der Intensität der Bedienhandlung eines Fahrers auf dessen Aufmerksamkeit geschlossen. Dies führt dazu, dass das System "Front Assist" oft bei vorausfahrenden Fahrzeugen warnt, die sich in einem Abbiegevorgang befinden. Für den Fahrer ist diese Warnung unerwünscht, da er erkennt, dass das verlangsamende abbiegende Fahrzeug seine Fahrspur verlassen wird und er daher die Situation als unkritisch einschätzt. Infolgedessen nimmt er kaum Bedienhandlungen vor, so dass vom System keine Aufmerksamkeit seitens des Fahrers festgestellt werden kann und daher auf einen unaufmerksamen Fahrer geschlossen wird, wodurch das System eine hohe Fahrerreaktionszeit annimmt, die für die Ermittlung des Warnzeitpunkts herangezogen wird. Dies führt dann zu einem frühen, für den Fahrer irritierenden Warnzeitpunkt.

Um die Aufmerksamkeit des Fahrers besser detektieren zu können, kann der Fahrer beobachtet werden, um beispielsweise aus seiner Kopfhaltung seine Aufmerksamkeit bestimmen zu können. Dies bedingt jedoch zusätzliche Sensorik im Fahrzeug und ist kostentreibend.

Die Druckschriften JP 2009 093561 A und DE 10 2008 019 519 A1 beschreiben Verfahren, bei denen anhand der Umfeldsensorik ein Fahrverhalten eines vorausfahrenden Fahrzeuges auf Basis eines erfassten Bremslichts bestimmt wird. Das Fahrverhalten des vorausfahrenden Fahrzeuges, weitere fahrphysikalische Eigenschaften sowie das Fahrverhalten des Fahrers werden miteinander korreliert, um anhand dieser Korrelation die Aktivität des Fahrers und daraus wiederum eine Fahrerreaktionszeit zu ermitteln. Zur Vermeidung von Auffahrunfällen und zum rechtzeitigen Warnen des Fahrers wird diese Fahrerreaktionszeit vom Assistenzsystem im Fahrzeug verarbeitet.

Die DE 10 2011 115 878 A1 offenbart ein Verfahren zur Warnung des Fahrers vor einer drohenden Kollision. Die Warnung wird in Abhängigkeit von der Fahrerreaktionszeit abgegeben. Diese Fahrerreaktionszeit kann Werte zwischen einem vorgegebenen minimalen und maximalen Wert einnehmen und wird aus der Fahreraktivität bestimmt.

Der DE 10 2013 218 280 A1 kann man ein Verfahren zur Bestimmung der Kollisionsgefahr eines Fahrzeuges entnehmen. Die Kollisionsgefahr wird auf einen Schwellwert abgebildet, der sich aus verschiedenen fahrer-, fahrzeug- und hindernisabhängigen Parametern ergibt. Maßnahmen zur Verhinderung und Folgeminderung werden als Funktion dieses Schwellwerts ergriffen.

Der Erfindung liegt daher die Aufgabe zugrunde, bei Assistenzsystemen mit einer Umfeldüberwachung, wie beispielswiese das Umfeldbeobachtungssystem "Front Assist", überflüssige Warnungen an den Fahrer zu vermeiden und die Bestimmung adaptiver Fahrerreaktionszeiten zu verbessern.

Diese Aufgabe wird durch ein Verfahren mit den Merkmalen des Anspruchs 1 sowie ein Assistenzsystem mit den Merkmalen des Anspruchs 9 gelöst. Bevorzugte Ausführungsformen der Erfindung sind Gegenstand der Unteransprüche.

Das erfindungsgemäße Verfahren zur Ermittlung einer aus der Aktivität des Fahrers bestimmten adaptiven Reaktionszeit eines Fahrers eines Kraftfahrzeugs

- wird eine erste fahrzeugspezifische Fahreraktivität aus der Intensität anhand der vom Fahrer im Kraftfahrzeug vorgenommenen Bedienhandlungen bestimmt,

- wird eine zweite korrelierte Fahreraktivität, welche die zeitliche Korrelationen zwischen dem Verhalten eines vorausfahrenden Fahrzeugs und dadurch verursachten Reaktionen des Fahrer wiederspiegelt, bestimmt, und

- wird zur Bestimmung der adaptiven Fahrerreaktionszeit eine Verknüpfung der beiden ermittelten Fahreraktivitäten verwendet.

Auf diese Weise wird die Ermittlung der Fahreraktivität aus der Intensität der fahrerseitigen Bedienhandlungen mit der Ermittlung der Fahreraktivität aus der zeitlichen Korrelation von Fahrerhandlungen mit dem Verhalten des vorausfahrenden Fahrzeugs verknüpft, um eine realitätsnahe Fahreraktivität zu erhalten.

Die zweite korrelierte Fahreraktivität wird durch die folgenden Schritte bestimmt:

- Bestimmen des Fahrverhaltens eines vorausfahrenden Fahrzeugs mittels einer Umfeldsensorik,

- Bestimmen von Aktivitäten des Fahrers des Kraftfahrzeug,

- Bestimmen zeitlicher Korrelationen zwischen dem Fahrverhalten des vorausfahrenden Fahrzeug und den Aktivitäten des Fahrers, und

- Bestimmen der Fahreraktivität aus den zeitlichen Korrelationen.

Auf diese Weise ist es möglich die Fahreraktivität durch die Ermittlung der Korrelation zwischen dem Fahrverhalten des vorausfahrenden Fahrzeugs und dazu korrelierten Bedienhandlungen des Fahrers als Reaktion auf das Fahrverhalten des Vorderfahrzeugs zu bestimmen. Somit können auch relativ wenig intensive Bedienhandlungen des Fahrers zur Beurteilung der Fahreraktivität dienen.

Weiter bevorzugt wird das Fahrverhalten des Vorderfahrzeugs anhand der Verzögerung des Vorderfahrzeugs bestimmt. Dies ist ein Parameter, der durch eine geeignete Sensorik leicht feststellbar ist und der bei einem Abbiegevorgang das Verlangsamen des abbiegenden Fahrzeugs charakterisiert. Vorzugsweise wird das Verhalten des Fahrers anhand der Betätigung des Gaspedals und der Betätigung der Bremse ermittelt. Dies sind die Bedienhandlungen, die der aufmerksame Fahrer ausführt, wenn das vorausfahrende Fahrzeug zum Abbiegen verlangsamt. Durch die Bestimmung der zeitlichen Korrelation zwischen dem Parameter, der auch als Manöver-Attribut bezeichnet wird, und den genannten Bedienhandlungen kann erkannt werden, ob der Fahrer aufmerksam ist oder nicht.

Weiter bevorzugt wird die zeitliche Korrelation zwischen einer Verzögerung des vorausfahrenden Fahrzeugs und den Fahrerreaktionen "vom Gas gehen" sowie "Bremsen" und die Korrelation zwischen einer Verringerung der Verzögerung des vorausfahrenden Fahrzeugs und den Fahrerreaktionen "Gas geben" sowie "Bremse lösen" ermittelt. Diese Korrelation beschreibt die Reaktion des Fahrers auf das Verlassen des vorausfahrenden Fahrzeugs von der aktuellen Fahrbahn durch den Abbiegevorgang, der vom Fahrer des Kraftfahrzeugs zu einer Beschleunigung genutzt wird, um beispielsweise die vorherige Fahrgeschwindigkeit wieder zu erreichen.

Vorzugsweise wird die Fahreraktivität durch einen Wert eines vorgegebenen geschlossenen Intervalls, insbesondere des Intervalls [0, 1], repräsentiert. Mit anderen Worten, die Fahreraktivität wird auf ein abgeschlossenes Intervall abgebildet, bei dem eine Intervallgrenze einen inaktiven Fahrer und die andere Intervallgrenze einen aktiven Fahrer repräsentiert. Werte dazwischen stellen einen Fahrer mit einer Aktivität zwischen den beiden Grenzwerten dar. Das Intervall [0, 1] stellt folglich ein normiertes Wahrscheinlichkeitsmaß der Fahreraktivität dar.

Vorzugsweise wird die Verknüpfung durch die Bildung des Minimums der beiden ermittelten Fahreraktivitäten, d.h. der fahrzeugspezifischen und der korrelierten Fahreraktivität, gebildet. Durch die Minimumbildung kann ein aktiver Fahrer auch anhand kleiner Bedienhandlungen erkannt werden und eine realistische Fahrerreaktionszeit ermittelt werden.

Vorzugsweise kommen als Parameter, welche die Bedienhandlungen des Fahrers wiedergeben, zumindest die Lenkradwinkelgeschwindigkeit, die Querbeschleunigung, den Blinkerstatus, den Gaspedalgradient und die Längsbeschleunigung in Frage.

Das erfindungsgemäße Assistenzsystem zur vorausschauenden Umfeldüberwachung eines Kraftfahrzeugs, wobei das Assistenzsystem zur Durchführung des obigen zweiten Verfahrens eingerichtet und ausgelegt ist, umfasst

- eine Einrichtung zur Erfassung des vordereren Umfelds des Kraftfahrzeugs,
- eine Einrichtung zum Bestimmen des Fahrverhaltens eines vorausfahrenden Fahrzeugs aus den Umfelddaten,
- eine Einrichtung zur Bestimmung von Bedienhandlungen des Fahrers im Kraftfahrzeugs,
- ein Modul zur Ermittlung der fahrzeugspezifischen Fahreraktivität,
- ein Modul zur Ermittlung der korrelierten Fahreraktivität aus der Interaktion zwischen dem vorausfahrenden Fahrzeug und Reaktionen des Fahrers,
- eine Einrichtung zur Bestimmung einer resultierenden Fahreraktivität aus der fahrzeugspezifischen Fahreraktivität und der korrelierten Fahreraktivität,
- eine Einrichtung zur Bestimmung einer Fahrerreaktionszeit aus der resultierenden Fahreraktivität,
- eine Einrichtung zur Erzeugung einer Warnung an den Fahrer als Funktion der Fahrerreaktionszeit und des Abstands zu dem vorausfahrenden Fahrzeug.

Als Assistenzsystem kommt beispielsweise das eingangs beschriebene Umfeldbeobachtungssystem "Front Assist" in Frage, welches in zweistufiger Weise Warnsignale und gegebenenfalls eine Notbremsung einleitet, wobei die erfindungsgemäß ermittelte adaptive Fahrerreaktionszeit in die Ausführung des Assistenzsystems einfließt.

Eine bevorzugte Ausführungsform der Erfindung wird nachfolgend anhand der Figuren erläutert. Dabei zeigt

Fig. 1    eine typische Verkehrssituation mit einem vorausfahrenden abbiegenden Fahrzeug,

Fig. 2    das Verfahren zur Adaption der Reaktionszeit des Assistenzsystems, und

Fig. 3    eine Erläuterung des Verfahren anhand des zeitlichen Ablaufs eines Beispiels.

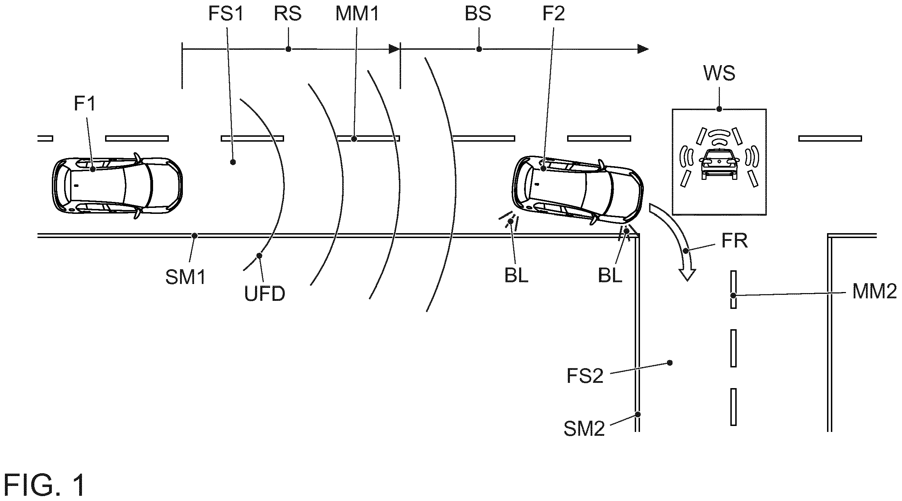

Fig. 1 zeigt eine typische Abbiegesituation, in welcher ein in einem Abstand vor einem Eigenfahrzeug F1 vorwegfahrendes abbiegendes Fahrzeug F2 von einer ersten Fahrspur FS1 an einer Einmündung einer zweiten Fahrspur FS2 in diese nach rechts abbiegt, wobei die Fahrspuren FS1 und FS2 durch Mittenmarkierungen MM1 und MM2 sowie durch Randmarkierungen SM1 und SM2 begrenzt werden. Die Abbiegeabsicht des vorausfahrenden Fahrzeugs F2 wird durch die aktivierten Blinklichter BL und die Abbiegerichtung durch den Richtungspfeil FR angezeigt.

Das dem abbiegenden Fahrzeug F2 nachfolgende Eigenfahrzeug F1 verfügt über ein "Front Assist" System, welches das vorausfahrende Fahrzeug F2 mittels einer in Fahrtrichtung gerichteten Umfeldsensorik, beispielsweise ein Radarsystem, detektiert. Das Radarsystem ist in Fig. 1 durch eine Reihe von ausgesendeten Umfelddetektionspulsen UFD schematisch dargestellt.

Weiter sind in der Fig. 1 zwei Abstände eingezeichnet. Die Reaktionsstrecke RS stellt die Zeit der unveränderten Fahrt bei einer angenommenen Fahrerreaktionszeit dar. Mit anderen Worten, das "Front Assist" System nimmt für eine aktuelle Fahrsituation eine für diese Fahrsituation vorgegebene Fahrerreaktionszeit an. Diese angenommene Fahrerreaktionszeit bestimmt das "Front Assist" System üblicherweise aus der Fahreraktivität des Fahrers, also der Bedienung des Gaspedals, der Bremse und/oder des Lenkrads, da derartige Systeme keine direkte Fahrerbeobachtung, wie beispielsweise mittels einer Kamera, durchführen.

An der durch die angenommene Fahrerreaktionszeit zurückgelegten Reaktionsstrecke RS schließt sich eine Bremsstrecke BS an, die der Fahrer benötigen würde, um mittels einer Komfortbremsung eine Kollision mit dem vorausfahrenden Fahrzeug F2 zu vermeiden. Dabei berechnet das Assistenzsystem den zukünftigen Abstand zwischen den beiden Fahrzeugen unter Berücksichtigung der Geschwindigkeit und der Verzögerung bzw. Beschleunigung des vorausfahrenden Fahrzeugs F2. Ergibt sich eine Kollisionsgefährdung, so gibt das Assistenzsystem eine Warnung aus, die in Fig. 1 als Warnsymbol WS dargestellt ist.

In der aktuellen Implementierung erkennt das Assistenzsystem nicht, ob das vorausfahrende Fahrzeug F2 abbiegt oder nicht. Folglich behandelt das Assistenzsystem das vorausfahrende Fahrzeug F2 als Hindernis, welches mit abnehmender Geschwindigkeit vorausfährt und auf welches das Eigenfahrzeug F1 aufläuft. Da der aufmerksame Fahrer aufgrund der Verkehrssituation und des aktivierten Blinklichts BL die Abbiegeabsicht des vorausfahrenden Fahrzeugs erkennt, ist die an das Assistenzsystem übermittelte Fahreraktivität gering, da der Fahrer üblicherweise nur leicht vom Gas geht, eventuell sich bremsbereit verhält und keine Lenkaktivität zeigt. Aus diesen minimalen Fahreraktivitäten schließt das Assistenzsystem dann auf einen im Wesentlichen inaktiven bzw. unaufmerksamen Fahrer und nimmt eine lange Reaktionszeit an. Als Ergebnis wird an den Fahrer des Eigenfahrzeugs F1 eine frühzeitige Warnung ausgegeben, die in Fig. 1 in der Form des Warnsignals WS dargestellt ist, da der Warnzeitpunkt so gewählt werden muss, dass der Fahrer nach der Warnung noch in der Lage ist, durch eine Bedienhandlung, wie beispielsweise Bremsen oder Lenken, die Gefahrensituation zu entschärfen.

Eine derartige frühzeitige Warnung, wie dies aus der vermeintlichen Inaktivität des Fahrers resultiert, ist natürlich für den aufmerksamen Fahrer überflüssig, da dieser die Abbiegeabsicht des vorausfahrend Fahrzeugs F2 erkennt und geeignet auf das Verhalten des Vorderfahrzeugs F2 reagiert, indem er üblicherweise vom Gas geht und gegebenenfalls leicht bremst. Um eine unnötige frühzeitige Ausgabe eines Warnsignals WS zu vermeiden, stellt daher das Assistenzsystem auf eine Interaktion zwischen dem durch die Umfeldsensorik UFD gemessenen Verhalten des vorausfahrenden Fahrzeugs und dem Fahrerverhalten ab. Indem das Verhalten des Assistenzsystems die Reaktion des Fahrers des Eigenfahrzeugs F1 auf das Verhalten des vorausfahrenden Fahrzeugs berücksichtigt, können unnötige Warnsignale vermieden werden, da sozusagen das Abbiegeverhalten des vorausfahrenden Fahrzeugs "erkannt" wird.

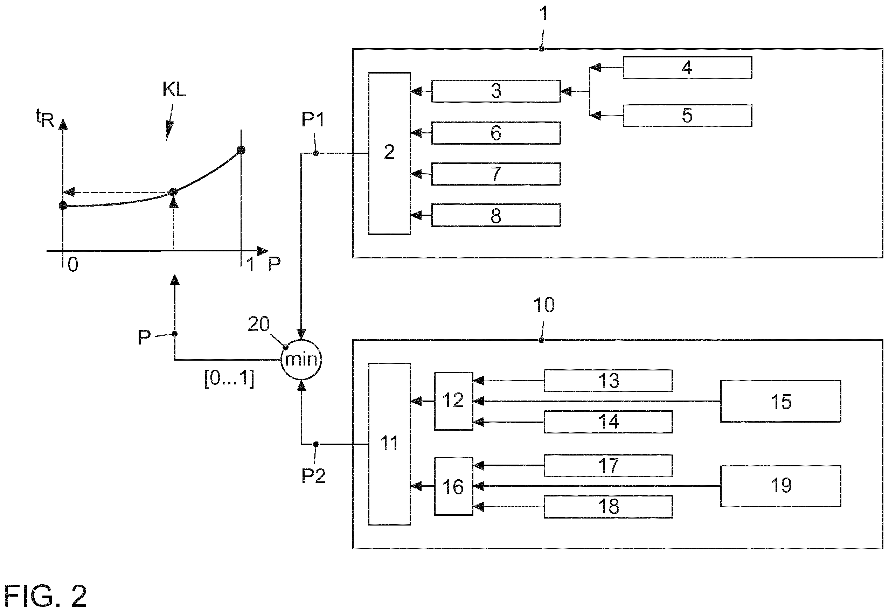

Fig. 2 zeigt in schematischer Darstellung das Verfahren zur Bestimmung einer adaptiven Reaktionszeit des Fahrers, welches in einem Assistenzsystem "Front Assist" mit Abbiegerfunktion realisiert ist. Dabei umfasst das Verfahren bzw. das System ein erstes Modul 1 zur Bestimmung der eigenfahrzeugspezifischen Fahreraktivität sowie ein zweites Modul 10 zur Ermittlung der Interaktion zwischen vorausfahrenden Fahrzeug und der Fahrerreaktion. Mit anderen Worten, das zweite Modul 10 ermittelt die Korrelation zwischen dem Fahrverhalten eines vorausfahrenden Fahrzeugs F2 und der daraus resultierenden Reaktion des Fahrers des Eigenfahrzeugs F1, wie dies schematisch in der Fig. 1 dargestellt ist.

Im ersten Modul 1 zur Ermittlung der eigenfahrzeugspezifischen Fahreraktivität wird eine erste Passivität P1 bestimmt, welche die Aktivität des Fahrers widerspiegelt, wobei diese Passivität P1 anhand von fahrzeugspezifischen Parametern bestimmt wird. Im zweiten Modul 10 wird eine zweite Passivität P2 bestimmt, die die Fahreraktivität des Fahrers bestimmt anhand der Interaktion zwischen dem Verhalten des vorausfahrenden Fahrzeugs F2 und den damit korrelierten Reaktionen des Fahrers des Eigenfahrzeugs F1. Die Werte beider Passivitäten P1 und P2 sind Elemente des abgeschlossenen Intervalls [0, 1], wobei eine Passivität von "1" bedeutet, dass der Fahrer inaktiv und eine Passivität von "0" einen aktiven Fahrer widerspiegelt. Anstelle der hier im Beispiel verwendeten Passivität könnte in gleicher Weise eine Fahreraktivität definiert werden, bei der der Fahrer bei einem Wert von "1" als aktiv angenommen wird.

Die beiden ermittelten Passivitäten P1, P2 werden in einer Einrichtung 20 miteinander verknüpft, wobei die Verknüpfung insbesondere durch die Bildung des Minimums der beiden Passivitäten P1, P2 realisiert ist und die resultierende Passivität P zur Ermittlung der adaptiven Fahrerreaktiosnzeit genutzt wird. Es gilt also

$$P = \min(P1, P2); \quad P, P1, P2 \; \epsilon \; [0, 1]$$

Die resultierende Passivität P, die ebenfalls auf dem abgeschlossenen Intervall [0, 1] definiert ist, wird mithilfe einer Kennlinie KL in eine entsprechende Fahrerreaktionszeit $t_R$ übersetzt. Diese Kennlinie KL, die den Zusammenhang zwischen einer Fahrerpassivität und einer Fahrerreaktionszeit wiedergibt, kann beispielsweise mithilfe geeigneter Versuche bestimmt werden. Wie aus der Kennlinien KL weiter ersichtlich ist, ist einen inaktiven Fahrer in der Passivität P = 1 eine große Fahrerreaktionszeit zugeordnet, während einem Passivitätswert P = 0 eine kleine Fahrerreaktionszeit entspricht. Der Verlauf der Kennlinie KL zwischen den Werten P = 0 und P = 1 ist üblicherweise nicht linear.

Die Bestimmung der fahrzeugseitigen Passivität P1 im Modul 1, welche die fahrzeugspezifische Fahreraktivität wiedergibt, erfolgt durch die Analyse verschiedener Parameter, die die Aktivität des Fahrers widerspiegeln. Mittels der von entsprechenden Fahrzeugsensoren bestimmten Parameter Lenkradgeschwindigkeit 4 und [...] Querbeschleunigung 5, wird die laterale Stabilität 3 des Fahrzeugs bestimmt. Mittels der lateralen Stabilität 3 und den Parametern Blinker 6, Gaspedalgradient 7 und Längsbeschleunigung 8 wird im Block 2 die Fahreraktivität bestimmt und in eine fahrzeugseitige Passivitätsgröße P1 mit dem Wertebereich [0,1] umgesetzt und ausgegeben. Mit anderen Worten, ist beispielsweise der Blinker 6 gesetzt, der Gaspedalgradient groß und/oder die Längsbeschleunigung groß, so wird auf einen aktiven Fahrer geschlossen und die Passivität P1 auf den Wert Null gesetzt. Ist hingegen die Lenkradwinkelgeschwindigkeit 4 und die Querbeschleunigung 5 klein, der Blinker 6 nicht gesetzt, der Gaspedalgradient 7 klein oder Null und/oder die Längsbeschleunigung 8 ebenfalls klein oder Null, so steht dies für einen inaktiven Fahrer mit einem entsprechenden Passivitätswert P1 = 1. Allgemein ausgedrückt wird aus der Intensität der Bedienhandlungen des Fahrers auf seine Aufmerksamkeit geschlossen.

Wie sich aus der obigen Beschreibung des Moduls 1 zu Ermittlung der eigenfahrzeugspezifischen Fahreraktivität ergibt, kommt dieses Modul 1 bei einem Abbiegevorgang eines vorausfahrenden Fahrzeugs F2 aufgrund der geringen Änderung von Lenkradwinkelgeschwindigkeit 4 und Querbeschleunigung 5, sowie einem kleinen Gaspedalgradienten 7 und einer geringen Längsbeschleunigung 8 bzw. geringem Bremsen zum Schluss, dass es sich wahrscheinlich um einen inaktiven Fahrer handelt, was aber für diesen Abbiegefall des Vorderfahrzeugs F2 gerade nicht zwangsläufig zutreffen muss.

Um nun diese mögliche Fehleinschätzung der Fahreraktivität des Moduls 1 zu Ermittlung der eigenfahrzeugspezifischen Fahreraktivität überprüfen bzw. korrigieren zu können, wird im zweiten Modul 10 die Korrelation zwischen dem Verhalten des Vorderfahrzeugs F2 und einer dieses Verhalten widerspiegelnden Reaktion des Fahrers des Eigenfahrzeugs F1 untersucht.

So umfasst das Modul 10 eine Korrelationseinheit 12, welche die zeitliche Korrelation zwischen der Verzögerung des Vorderfahrzeuges und der Fahrerreaktion feststellt, wobei als Eingangsgrößen die Parameter "Verzögerung des Vorderfahrzeugs" 15, "Fahrerreaktion vom Gas gehen" 13 und "Fahrerreaktion Bremsen" 14 verwendet werden. Dabei wird der Parameter 15 "Verzögerung des Vorderfahrzeugs" von der Umfelddetektion des Assistenzsystems "Front Assist" bereitgestellt, während die Parameter 13 "vom Gas gehen" und 14 "Bremsen" von Sensoren des Eigenfahrzeugs F1 bereitgestellt werden.

Weiter umfasst das Modul 10 eine weitere Korrelationseinheit 16, die die zeitliche Korrelation zwischen einer Verringerung der Verzögerung des Vorderfahrzeugs F2 und einer davon hervorgerufenen Fahrerreaktion herstellt. Eingangsgrößen für diese weitere Korrelationseinheit 16 sind auf der Seite des Vorderfahrzeugs F2 der Parameter 19 "Verringerung der Verzögerung des Vorderfahrzeugs" und die möglichen Fahrerreaktionen "Gas geben" 17 und "Bremse lösen" 18 im Eigenfahrzeug F1.

Die Ergebnisse der beiden Korrelationseinheiten 12, 16 werden eine Einrichtung zur Ermittlung 11 der korrelierten Fahreraktivität des Fahrers des Eigenfahrzeugs F1 zugeführt, welche als Ergebnis den zweiten Passivitätsparameter P2 des Fahrers ausgibt, wobei dieser zweite Passivitätsparameter P2 die korrelierte Fahreraktivität anhand der Reaktion des Fahrers auf das abbiegende Vorderfahrzeug F2 widerspiegelt.

Es werden im weiteren Modul 10 also für das vorausfahrende Fahrzeug Manöver-Attribute bestimmt, wie beispielsweise " Beginnt Verzögerung", "Verstärkt Verzögerung" oder" Abnahme der Verzögerung" und es wird analysiert, ob zeitlich korreliert eine adäquate Reaktion des Fahrers erfolgt. Eine adäquate Reaktion auf das Manöver-Attribut "Beginnt Verzögerung" ist beispielsweise eine Verringerung des Druckes auf das Gaspedal oder eine Erhöhung des Bremsdrucks seitens des Fahrers. Durch die geforderte zeitliche Korrelation können auch Fahrerhandlungen mit geringer Intensität, wie sie bei einem abbiegenden vorausfahrenden Fahrzeug häufig auftreten, genutzt werden, um eine geeignete adaptive Fahrerreaktionszeit zu bestimmen..

Durch die Minimumbildung aus den beiden ermittelten Passivitäten P1, P2 wird in dem Fall eines abbiegenden Vorderfahrzeugs das Ergebnis des Moduls 10, welches die Interaktion zwischen vorausfahrenden Fahrzeug und Fahrer ermittelt, als Fahreraktivität zur Bestimmung der Fahrerreaktionszeit verwendet, so dass die Fehleinschätzung des ersten Moduls 1 bezüglich der Aktivität des Fahrers des Eigenfahrzeugs unberücksichtigt bleibt.

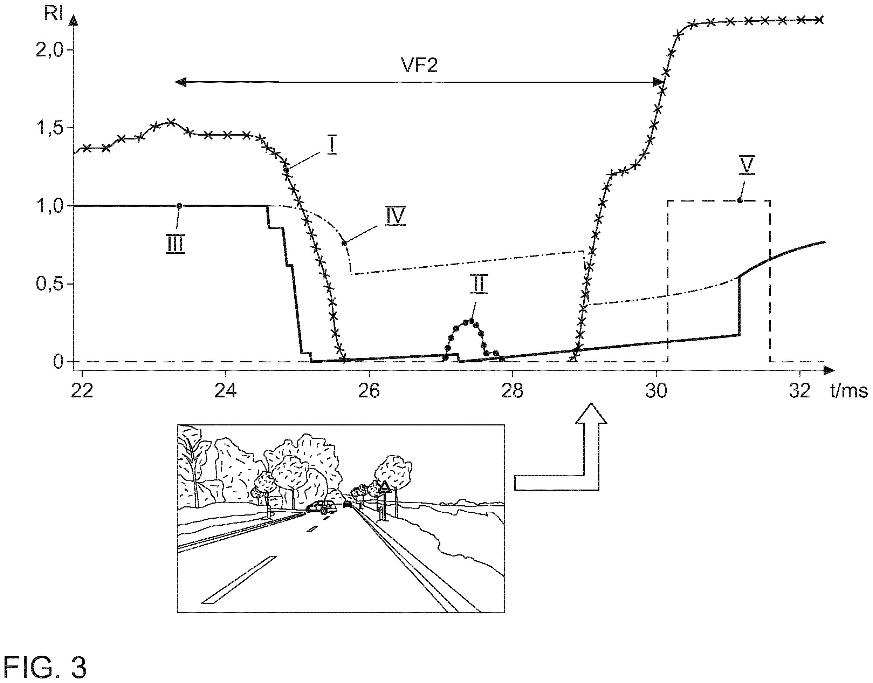

Fig. 3 zeigt ein Beispiel eines Abbiegevorgangs eines vorausfahrenden Fahrzeugs, wobei im unteren Teil der Figur ein Bild der Verkehrssituation zu sehen ist, während im oberen Teil dieser Abbiegevorgang aus Sicht des Eigenfahrzeugs in zeitlicher Auflösung anhand geeigneter Parameter dargestellt ist, wobei die in den Kurven dargestellten Parameter nicht quantitativ zu werten sind, sondern der Erläuterung dienen.

Im unteren Bildteil der Figur 3 ist aus der Sicht des Eigenfahrzeugs F1 ein auf einer zweispurigen Straße vorausfahrendes Fahrzeug zu sehen, welches nach links ab biegt und somit die aktuelle Straße verlässt.

Dieser Vorgang und das Verhalten des Assistenzsystems "Front Assist" ist in der darüber liegenden Grafik in zeitlicher Auflösung zu sehen. Während des eingezeichneten Zeitraums VF2 detektiert das Umfeldbeobachtungssystem "Front Assist" eine Verzögerung des vorausfahrenden Fahrzeugs F2, welche bei ungefähr t = 23 ms einsetzt und bei t = 30 ms beendet ist. Zu Beginn der Darstellung, also bei t = 22 ms, hat noch keine Verzögerung des vorausfahrenden Fahrzeugs F2 stattgefunden und die durch die Kurve I wiedergegebene Gaspedalstellung gibt eine Größe an, die zur Beibehaltung der Fahrzeuggeschwindigkeit des Eigenfahrzeugs ausreichend ist. Die durch die Kurve III wiedergegebene Sensitivität des Assistenzsystems, also die Passivität P des Fahrers, befindet sich zu diesem Zeitpunkt auf dem Wert P = 1, da das System aufgrund eines mangelnden Gaspedalgradienten und mangelnder Lenkbewegung sowohl vom ersten als auch zweiten Modul einen inaktiven Fahrer signalisiert bekommt.

Kurz nach dem Einsetzen der Verzögerung des Vorderfahrzeuges geht bei ca. t = 25 ms der Fahrer vom Gaspedal, was aus der Kurve I ersichtlich ist. Als Folge davon macht sich der Einfluss des Moduls 10 bemerkbar und die Sensitivität/Passivität fällt bis auf den Wert Null ab. In Kurve IV ist der Verlauf der Passivität P1 des Moduls 1 dargestellt, welche zwar auch leicht abfällt und bei ca. t = 26 ms den Wert 0,5 erreicht. Diese Abfall wird durch den geringen Gaspedalgradienten 7 des Moduls 1 der Figur 2 bewirkt. Die Gesamtsensitivität bzw. die resultierende Passivität P der Kurve 3 bleibt leicht ansteigend nahe dem Wert "0" und wird durch das durch die Kurve II wiedergegebene leichte Bremsmanöver wieder auf den Wert "0" gedrückt. Obwohl die Verzögerungsphase VF2 des Vorderfahrzeuges zeitlich noch nicht beendet ist, betätigt der Fahrer bei ungefähr t = 29 ms wieder das Gaspedal, da er erkannt hat, dass das Vorderfahrzeug den Abbiegevorgang fast beendet hat. Mit anderen Worten, zur Wiedererlangung der Fahrzeuggeschwindigkeit betätigt der Fahrer das Gaspedal, um bei etwas über t = 30 ms den Druck auf das Gaspedal wieder konstant zu halten. Demzufolge steigt bei ungefähr t = 31 ms die Sensitivität/resultierende Passivität wieder leicht an. Ohne die Berücksichtigung der zeitlichen Korrelation zwischen dem Verhalten des Vorderfahrzeugs F2 und der Reaktion des Fahrers würde gemäß der Kurve IV, die rein die eigenfahrzeugspezifische Passivität P1 wiedergibt, die eigenfahrzeugspezifische Passivität P1 hervorgerufen durch die Gaspedalbedienung zwar einen Wert kleiner als "0,5" haben, was allerdings immer noch dazu führen würde, dass zu einer Zeit von etwas größer als T = 30 ms ein Warnsignal V ausgegeben werden würde. Diese Warnsignal wäre für den Fahrer völlig sinnlos, da die Verzögerungsphase VF2 des Vorderfahrzeugs beendet ist, mit anderen Worten das Vorderfahrzeug durch den Abbiegevorgang die vorausliegende Straße verlassen hätte.

Bedingt durch die Berücksichtigung der Interaktion zwischen dem Verhalten des Vorderfahrzeugs F2 und der Fahrerreaktion werden durch das Modul 10 unnötige Warnungen im Fall eines Abbiegevorgangs eines vorausfahrenden Fahrzeugs F2 unterdrückt.

**Bezugszeichenliste**

| F1 | Eigenfahrzeug |
| F2 | abbiegendes Fahrzeug |
| FS1 | Fahrspur 1 |
| FS2 | Fahrspur 2 |
| FR | Fahrtrichtung |
| MM1 | Mittenmarkierung Fahrspur 1 |
| MM2 | Mittenmarkierung Fahrspur 2 |
| SM1 | Randmarkierung |
| SM2 | Randmarkierung |
| BL | Blinklicht |
| RS | Reaktionsstrecke |
| BS | Bremsstrecke |
| UFD | Umfelddetektion / Radar |
| WS | Warnsymbol |

| 1 | Modul eigenfahrzeugspezifische Fahreraktivität |
| 2 | Ermittlung eigenfahrzeugspezifischer Passivität |
| 3 | Bestimmung der lateralen Stabilität |

| 4 | Lenkradwinkelgeschwindigkeit |
| 5 | Querbeschleunigung |
| 6 | Blinker |
| 7 | Gaspedalgradient |
| 8 | Längsbeschleunigung |
| 10 | Modul korrelierte Fahreraktivität aus der Interaktion vorausfahrendes Fahrzeug-Fahrerreaktion |
| 11 | Ermittlung korrelierte Fahreraktivität |
| 12 | Korrelation Verzögerung Vorderfahrzeug - Fahrerreaktion |
| 13 | Fahrerreaktion vom Gas gehen |
| 14 | Fahrerreaktion leicht bremsen |
| 15 | Verzögerung Vorderfahrzeug |
| 16 | Korrelation Verringerung der Verzögerung Vorderfahrzeug - Fahrerreaktion |
| 17 | Fahrerreaktion Gas geben |
| 18 | Fahrerreaktion Bremse lösen |
| 19 | Verringerung der Verzögerung Vorderfahrzeug |
| 20 | Minimumbildung |
| P1 | Passivität 1 |
| P2 | Passivität 2 |
| P | resultierende Passivität |
| $t_R$ | Reaktionszeit Fahrer |
| KL | Kennlinie |

| VF2 | Verzögerung Vorderfahrzeug |
| I | Stellung Gaspedal |
| II | Betätigung Bremse |
| III | Sensitivität |
| IV | Sensitivität ohne Interaktion Vorderfahrzeug - Fahrerreaktion |
| V | Warnung ohne Interaktion |
| t | Zeit |

**Patentansprüche**

1.    Verfahren zur Ermittlung einer aus der Aktivität des Fahrers bestimmten adaptiven Reaktionszeit ($t_R$) eines Fahrers eines Kraftfahrzeugs (F1), wobei eine erste fahrzeugspezifische Fahreraktivität (P1) aus der Intensität seitens des Fahrers im Kraftfahrzeug (F1) vorgenommenen Bedienhandlungen und eine zweite korrelierte Fahreraktivität (P2), welche die zeitliche Korrelation zwischen dem Verhalten eines vorausfahrenden Fahrzeugs (F2) und dadurch verursachten Reaktionen des Fahrer wiederspiegelt, bestimmt werden, wobei, zur Bestimmung der adaptiven Fahrerreaktionszeit ($t_R$) eine Verknüpfung der beiden ermittelten Fahreraktivitäten (P1, P2) erfolgt.

2.    Verfahren nach Anspruch 1, wobei, die zweite korrelierte Fahreraktivität (P2) durch die Schritte bestimmt wird,
Bestimmen des Fahrverhaltens eines vorausfahrenden Fahrzeugs (F2) mittels einer Umfeldsensorik,
Bestimmen von Aktivitäten des Fahrers des Kraftfahrzeug (F1),
Bestimmen zeitlicher Korrelationen zwischen dem Fahrverhalten des vorausfahrenden Fahrzeug (F2) und den Aktivitäten des Fahrers des Kraftfahrzeugs (F1), und Bestimmen der Fahreraktivität (P2) aus den zeitlichen Korrelationen.

3. Verfahren nach Anspruch 2, wobei, das Fahrverhalten des Vorderfahrzeugs (F2) anhand der Verzögerung des Vorderfahrzeugs (F2) bestimmt wird.

4. Verfahren nach Anspruch 2 oder 3, wobei, das Verhalten des Fahrers anhand der Betätigung des Gaspedals und der Betätigung der Bremse ermittelt wird.

5. Verfahren nach Anspruch 3, wobei, die Korrelation (12) zwischen einer Verzögerung (15) des vorausfahrenden Fahrzeugs (F2) und den Fahrerreaktionen "vom Gas gehen" (13) sowie "Bremsen" (14) und die Korrelation (16) zwischen einer Verringerung der Verzögerung (19) des vorausfahrenden Fahrzeugs (F2) und den Fahrerreaktionen "Gas geben" (17) sowie "Bremse lösen" (18) ermittelt wird.

6. Verfahren nach einem der vorangegangenen Ansprüche, wobei, die Fahreraktivität (P) durch einen Wert eines vorgegebenen geschlossenen Intervalls, insbesondere das Intervall [0, 1], repräsentiert wird.

7. Verfahren nach einem der vorangegangenen Ansprüche, wobei, die Verknüpfung durch die Bildung des Minimums der beiden ermittelten Fahreraktivitäten (P1, P2) gebildet wird.

8. Verfahren nach einem der vorangegangenen Ansprüche, wobei, Parameter, welche die Bedienhandlungen des Fahrers wiedergeben, zumindest die Lenkradwinkelgeschwindigkeit (4), die Querbeschleunigung (5), den Blinkerstatus (6), den Gaspedalgradient (7) und die Längsbeschleunigung (8) umfassen.

9. Assistenzsystem zur vorausschauenden Umfeldüberwachung eines Kraftfahrzeugs (F1), wobei das Assistenzsystem zur Durchführung des Verfahrens nach einem der vorangegangenen Ansprüche eingerichtet und ausgelegt ist, mit
einer Einrichtung zur Erfassung des vordereren Umfelds des Kraftfahrzeugs (F1),
einer Einrichtung zum Bestimmen des Fahrverhaltens eines vorausfahrenden Fahrzeugs (F2) aus den Umfelddaten,
einer Einrichtung zur Bestimmung von Bedienhandlungen des Fahrers im Kraftfahrzeugs (F1),
einem Modul (1) zur Ermittlung der fahrzeugspezifischen Fahreraktivität (P1),
einem Modul (10) zur Ermittlung der korrelierten Fahreraktivität (P2) aus der Interaktion zwischen dem vorausfahrenden Fahrzeug (F2) und Reaktionen des Fahrers,
einer Einrichtung (20) zur Bestimmung einer resultierenden Fahreraktivität (P) aus der fahrzeugspezifischen Fahreraktivität und der korrelierten Fahreraktivität,
einer Einrichtung zur Bestimmung einer Fahrerreaktionszeit (t$_R$) aus der resultierenden Fahreraktivität,
einer Einrichtung zur Erzeugung einer Warnung an den Fahrer als Funktion der Fahrerreaktionszeit (t$_R$) und des Abstands zu dem vorausfahrenden Fahrzeug (F2).

**Claims**

1. Method for determining an adaptive reaction time (t$_R$) of a driver of a motor vehicle (F1) which is determined from the activity of the driver, wherein a first vehicle-specific driver's activity (P1) is determined from the intensity of operator control actions performed by the driver in the motor vehicle (F1), and a second correlated driver's activity (P2), which reflects the chronological correlation between the behavior of a vehicle (F2) driving ahead and reactions of the driver caused thereby, is determined, wherein,
in order to determine the adaptive driver's reaction time (t$_R$), the two determined driver's activities (P1, P2) are logically linked.

2. Method according to Claim 1, wherein the second correlated driver's activity (P2) is determined by the steps,
determining the driving behavior of a vehicle (F2) driving ahead by means of a surroundings sensor system,
determining activities of the driver of the motor vehicle (F1),
determining chronological correlations between the driving behavior of the vehicle (F2) driving ahead and the activities of the driver of the motor vehicle (F1), and determining the driver's activity (P2) from the chronological correlations.

3. Method according to Claim 2, wherein the driving behavior of the vehicle in front (F2) is determined on the basis of the deceleration of the vehicle in front (F2).

4. Method according to Claim 2 or 3, wherein, the behavior of the driver is determined on the basis of the activation of the accelerator pedal and the activation of the brake.

5. Method according to Claim 3, wherein the correlation (12) between a deceleration (15) of the vehicle (F2) driving ahead and the driver's reactions "take foot off accelerator pedal" (13) and "apply brakes" (14), and the correlation (16) between a reduction in the deceleration (19) of the vehicle (F2) driving ahead and the driver's reactions "accelerate" (17) and "release brakes" (18) is determined.

6. Method according to one of the preceding claims, wherein the driver's activity (P) is represented by a value of a predefined closed interval, in particular the interval [0, 1].

7. Method according to one of the preceding claims, wherein the logical linking is formed by the formation of the minimum value of the two determined driver's activities (P1, P2).

8. Method according to one of the preceding claims, wherein parameters which represent the operator control actions of the driver comprise at least the steering wheel angle speed (4), the lateral acceleration (5), the flashing indicator light status (6), the accelerator pedal gradient (7) and the longitudinal acceleration (8).

9. Assistance system for predicatively monitoring the surroundings of a motor vehicle (F1), wherein the assistance system is configured and designed to carry out the method according to one of the preceding claims, having
a device for sensing the surroundings in front of the motor vehicle (F1),
a device for determining the driving behavior of a vehicle (F2) driving ahead from the surroundings data,
a device for determining operator control actions of the driver in the motor vehicle (F1),
a module (1) for determining the vehicle-specific driver's activity (P1),
a module (10) for determining the correlated driver's activity (P2) from the interaction between the vehicle (F2) driving ahead and reactions of the driver,
a device (20) for determining a resulting driver's activity (P) from the vehicle-specific driver's activity and the correlated driver's activity,
a device for determining a driver's reaction time ($t_R$) from the resulting driver's activity,
a device for generating a warning to the driver as a function of the driver's reaction time ($t_R$) and the distance from the vehicle (F2) driving ahead.

**Revendications**

1. Procédé pour déterminer le temps de réaction adaptatif ($t_R$) d'un conducteur d'un véhicule automobile (F1), déterminé à partir de l'activité du conducteur, dans lequel on détermine une première activité du conducteur liée au véhicule (P1) à partir de l'intensité de manoeuvres de conduite effectuées de la part du conducteur dans le véhicule automobile et une deuxième activité du conducteur corrélée (P2), qui reproduit la corrélation temporelle entre le comportement d'un véhicule précédent (F2) et des réactions ainsi provoquées du conducteur, dans lequel on effectue un lien des deux activités de conducteur déterminées (P1, P2) pour la détermination du temps de réaction adaptatif du conducteur ($t_R$).

2. Procédé selon la revendication 1, dans lequel on détermine la deuxième activité corrélée du conducteur (P2) par les étapes suivantes:

déterminer le comportement de conduite d'un véhicule précédent (F2) au moyen de capteurs périmétriques,
déterminer des activités du conducteur du véhicule automobile (F1),
déterminer des corrélations temporelles entre le comportement de conduite du véhicule précédent (F2) et
les activités du conducteur du véhicule automobile (F1), et
déterminer l'activité du conducteur (P2) à partir des corrélations temporelles.

3. Procédé selon la revendication 2, dans lequel on détermine le comportement de conduite du véhicule précédent (F2) à l'aide de la décélération du véhicule précédent (F2).

4. Procédé selon la revendication 2 ou 3, dans lequel on détermine le comportement du conducteur à l'aide de l'actionnement de la pédale d'accélérateur et de l'actionnement du frein.

5. Procédé selon la revendication 3, dans lequel on détermine la corrélation entre une décélération (15) du véhicule précédent (F2) et les réactions du conducteur "lâcher la pédale d'accélérateur" (13) ainsi que "freiner" (14) et la corrélation (16) entre une diminution de la décélération (19) du véhicule précédent (F2) et les réactions du conducteur "appuyer sur la pédale d'accélérateur" (17) ainsi que "lâcher le frein" (18).

6. Procédé selon l'une quelconque des revendications précédentes, dans lequel on représente l'activité du conducteur (P) par une valeur d'un intervalle fermé prédéterminé, en particulier l'intervalle [0, 1].

7. Procédé selon l'une quelconque des revendications précédentes, dans lequel on forme le lien par la formation du minimum des deux activités déterminées du conducteur (P1, P2).

8. Procédé selon l'une quelconque des revendications précédentes, dans lequel des paramètres, qui reproduisent les manoeuvres de conduite du conducteur, comprennent au moins la vitesse angulaire du volant (4), l'accélération transversale (5), l'état des clignotants (6), le gradient de la pédale d'accélérateur (7) et l'accélération longitudinale (8).

9. Système d'assistance pour la surveillance périphérique anticipative d'un véhicule automobile (F1), dans lequel le système d'assistance est configuré et conçu pour la mise en oeuvre du procédé selon l'une quelconque des revendications précédentes, avec un dispositif pour détecter l'environnement avant du véhicule automobile (F1),
un dispositif pour déterminer le comportement de conduite d'un véhicule précédent (F2) à partir des données de l'environnement,
un dispositif pour déterminer des manoeuvres de conduite du conducteur dans le véhicule automobile (F1),
un module (1) pour déterminer l'activité du conducteur liée au véhicule (P1),
un module (10) pour déterminer l'activité corrélée du conducteur (P2) à partir de l'interaction entre le véhicule précédent (F2) et des réactions du conducteur, un dispositif (20) pour déterminer une activité résultante (P) du conducteur à partir de l'activité du conducteur liée au véhicule et de l'activité corrélée du conducteur,
un dispositif pour déterminer un temps de réaction du conducteur ($t_R$) à partir de l'activité résultante du conducteur,
un dispositif pour produire un avertissement pour le conducteur en fonction du temps de réaction du conducteur ($t_R$) et de la distance avec le véhicule précédent (F2).

FIG. 1

FIG. 2

EP 3 153 376 B1

FIG. 3

**IN DER BESCHREIBUNG AUFGEFÜHRTE DOKUMENTE**

**In der Beschreibung aufgeführte Patentdokumente**

- DE 102011115878 A1
- DE 10258617 B4
- DE 102007060862 A1
- JP 2009093561 A
- DE 102008019519 A1
- DE 102013218280 A1